# EUROPEAN PATENT SPECIFICATION

(11) **EP 2 192 747 B1**
(45) Date of publication and mention of the grant of the patent: **24.08.2011**
(21) Application number: 08305860.2
(22) Date of filing: 28.11.2008
(51) Int. Cl.: H04L 29/08, H04L 29/06, G06F 21/00, G06F 17/30

(54) **Method for providing access to a web server, web server and computer**
Verfahren zur Bereitstellung von Zugriff auf einen Webserver, Webserver und Computer
Procédé de fourniture d'accès à un serveur Web, serveur Web et ordinateur

(43) Date of publication of application: 02.06.2010
(73) Proprietor: Alcatel Lucent, 75008 Paris (FR)
(72) Inventor: Jean, Jose, 91550 Paray Vieille Poste (FR); Poussiere, Fabrice, 92160 Antony (FR); Bouche, Nicolas, 75013 Paris (FR)
(74) Representative: Schneider, Sandra

(56) References cited:
- WO-A-98/38759
- US-A1- 2008 281 617

## Description

### BACKGROUND OF THE INVENTION

The invention relates to a method for providing access to a web server, the access permitting a computer connected to the web server over a computerized network to effect changes on the web server. The invention also relates to a web server, a computer and a software program providing access to a web server.

The tasks of a web server comprise providing a web site for the internet. The web site provides a web service for the users of the internet. Examples for such web sites are Yellow Pages where the user can find persons which have assigned a personal area. Another example for a web site is a forum where users can insert and publish a text. Today it is not possible for a web user to introduce a personal communication tool into his personal area of Yellow Pages. The user also cannot customize his personal area of the Yellow Pages. It is also today not possible for a web user to insert a customized comment into a forum which comprises also video or other communication tools.

If a web user wants to change a web page provided by a web site of a web server the web user can only use the existing features proposed by the legacy web page to change or modify a web page. These are for example the communication tools of the web site the graphic table of the web site etc. If a web user wants to change other features of a web page of a web site he or she has to negotiate with the provider of the web site on the web server about the changes which he or she might be allowed to make on a web page of a web site of a web server.

Document US 2008/0281617 A1 describes an application for permitting users acces to and perform changes on a web server.

### OBJECT OF THE INVENTION

An object of the invention is to provide a negotiation protocol for a web server to allow to control automatically by the web server the changes that can be possible made by users. Users are for example contributing persons who want to enrich the web server's web site and web pages. The negotiation protocol might for example be with respect to all the graphic charts the web server or the rules of the web server and also with respect to the security of the web server. The negotiation protocol comprises a check if the requested changes of functions and contents are possibly dangerous for the web server.

### SUMMARY OF THE INVENTION

This object is solved by a method for providing access to a web server, a web server, a computer and a software program providing access to a web server, as claimed by the features of the independent claims. Features of preferred embodiments of the invention are subject matter of the independent claims.

The method for providing access to a web server provides access to a web server for a computer connected to the web server over a computerized network to effect changes to the web server. The method comprises the steps of the web server receiving from the computer data relating to the identity of the computer. The web server sending to the computer data relating to the changes that are permitted to be effected to the web server. And the web server receiving from the computer data relating to the changes that the computer possibly is to perform on the web server.

The method can be realized as a protocol to help exchange automatically between the contributing web user and the web server the necessary data to permit a change of the web server. The inventive method supports the automatic insertion of contents or data of a contributor to a web server. The requests of a web service user are entered over a computed connected to the web server over a computerized network. The web user enters this request into the computer and the request is transmitted from the computer to the web server in a first optional step if the web server supports the inventive protocol.

The inventive method comprises the step of the computer sending to the web server data relating to the identity of the computer. The data relating to the identity of the computer can for example be the ID of the computer, the address of the computer, the location of the computer etc. The web server receives said data relating to the identity of the computer from the computer.

The web server then checks and verifies the identity of the computer. This can for example be done by checking the coherence of the format of the received address, or for example that all mandatory fields are filled etc. It is another possibility to use a third party or third party software or third party web service in order to improve this identity check. For this the single signon system open ID can for example be used.

The web server sends to the computer data relating to the changes that are permitted to be effected on the web server. This data may for example comprise the authorized format that might be used on the web site, for example front size etc. This data may also comprised all types of modifications that are possible, for example modification of this or that area, modification of this or that script etc. This data may also comprise all possible tools that are authorized to be inserted into a web page of the web server.

The data relating to the changes that are permitted to be effected on the web server can optionally be sent in form of an XML file or a text file.

In a further step the computer sends data relating to the changes that the computer possibly is to perform on the web server to the web server. This data might for example be an E-contract which comprises promises or agreements in-between the computer and the web server. Such an E-contract may comprise the period of validity of the modifications. The period of validity might also be infinite.

The data relating to the changes that the computer possibly is to perform on the web server might be in the form of an XML file or text file.

According to a further embodiment of the invention the web server then receives from the computer data relating to the changes that the computer actually performs on the web server. Optionally, this data relating to the changes that the computer actually performs on the web server may be in form of an XML file or a text file. In this XML file or text file the modifications the computer wants to effect on the web server are described.

According to a further preferred embodiment of the invention these changes described in said data relating to the changes that the computer actually performs on the web server are performed on the web server. In order to do this the web server analyses the data relating to the changes that the computer actually performs on the web server and inserts those changes to the web server.

Optionally this data relating to the changes that the computer actually performs on the web server are in form of an XML file or a text file. In this case the web server then analyses this XML file or text file and checks if all the rules and all other requirements of the web server are met and then generates for example a JAVA script or JAVA or PHP (Hypertext Preprocessor) to be inserted to the web site. The modifications asked by the computer are by this taken into account by the web server and are by this performed on the web server.

According to a further preferred embodiment of the invention the web server then sends to the computer data relating to the changes that have been performed on the web server. This data may optionally be in form of an XML file or a text file. By this the web server confirms the modifications having been performed on the web server.

An inventive web server is accessible by a computer connected to the web server over a computerized network to effect changes on the web server.

The web server is adapted to perform the inventive method and the embodiments of the inventive method as described above. The web server comprises means for receiving from the computer data relating to the identity of the computer, means for sending to the computer data relating to the changes that are permitted to be effected on the web server and means for receiving from the computer data relating to the changes that the computer possibly is to perform on the web server.

A computer connectable to a web server over a computerized network is also adapted to perform the method and its embodiments as described above. The computer comprises means for sending to the web server data relating to the identity of the computer means for receiving from the web server data relating to the changes that are permitted to be effected on the web server and means for sending to the web server data relating to the changes that the computer possibly is to perform on the web server.

An inventive software program provides access to a web server. The software program comprises instructions for performing the steps of the inventive method and its embodiments as described above. The software program comprises instructions for receiving data relating to the identity of a computer connectible to a web server over a computerized network. Instruction for sending data relating to the changes that are permitted to be effected on the web server and instructions for receiving data relating to the changes that are possibly to be performed on the web server.

### BRIEF DESCRIPTION OF THE DRAWINGS

Other characteristics and advantages of the invention will become apparent in the following detailed description of preferred embodiments of the invention illustrated by the accompanying drawing given by way of non limiting illustration.

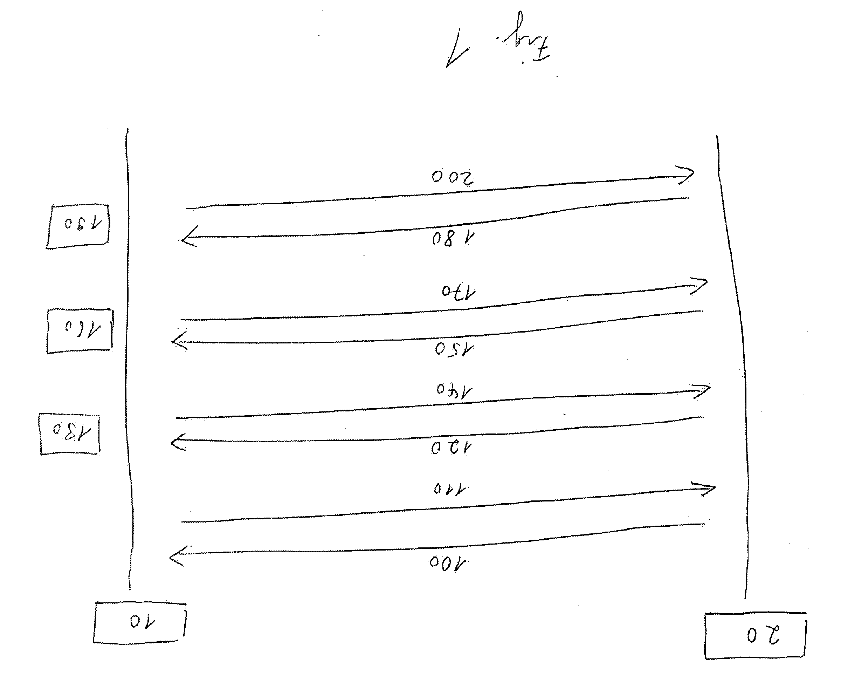

Figure 1 shows a schematic overview of a message flow of the inventive method.

### DETAILED DESCRIPTION OF THE INVENTION

In the following a preferred embodiment of the invention will be described using an example of a contribution into a web forum. The inventive method can be applied to example where a forum user wants to enrich his contribution to a forum by adding for example a new communication tool to his contribution. The goal is to customize the contribution not only by text and characters like today but by a new communication tool which goes beyond just text and characters. These customized modifications of the web server are for example to allow the forum's users to contact the user having made the communication using the communication tool added by him over a computer connected to the web server over a computerized network. In this case the computer of the user is the inserting party who wants to modify the web server. In the following the inventive method will be described using this example.

In Fig. 1, the computer 20 asks the web server 10 if it supports the inventive method by sending the first message 100. If the web server 10, e. g. the forum, supports the inventive method the web server 10 sends to the computer 20 an acknowledge message ok 110. In step 120 the computer 20 sends his ID, or address, or location to the forum web server 10 in order to be identifiable for the web server 10. For this a third party web service for example like open ID can be used.

In step 130 the web server 10 then verifies the identity information received from the computer 20 in step 120. This verification can for example be done by checking the coherence of the format of each field of the data or if all mandatory fields are filled etc. Several of these checks can also be done in one verification step 130.

In step 140 the web server 10 then sends an XML file or a text file in which it is described the type of modifications that are possible to do on the web server 10. Examples of what can be contained in such an XML file or text file are the formats that are authorized, e. g. font or size, the types of possible modifications, e. g. which areas can be modified, which scripts can be modified etc. and/or all possible tools that are authorized to be inserted into a web page of the web server 10.

In step 150 then the computer 20 sends a so-called E-contract where the changes the computer 20 possibly wants to do the web server 10 are summarized. This so-called E-contract is a real exchange of promises and agreements in-between the computer 20 and the web server 10. In addition this E-contract sent from the computer 20 to the web server 10 in step 150 notes the period of validity of the modifications the computer 20 wants to do the web server 10. The period of validity for the modifications may also be infinite.

In step 160 the so-called E-contract is analysed by the web server 10. In step 170 the web server 10 sends an ok or not ok acknowledge message to the computer 20, indicating if the proposed E-contract is accepted or not.

In step 180 the computer 20 sends an XML file or a text file where the modifications the computer 20 wants to do to the web server 10 are described precisely. In step 190 this XML file is analysed by the web server 10 and its accordance to all rules and requirements of the web server 10 is checked. If the requirements and rules of the web server 10 are all met then the web server 10 generates a JAVA script or JAVA or PHP to insert it to the web server 10. All the modifications requested by the computer 20 are then taken into account by the web server 10. In step 200 the web server 10 confirms to the computer 20 the modifications that have been performed and that the modifications are compatible with all the rules and requirements of the web server 10. This is done by an acknowledgement message ok or not ok in step 200. In the not ok acknowledgement message any errors which have occurred during step 190 can be reported to the computer 20 in step 200.

In advantage of the invention described above is that it is independent of the content or type of software that is to be inserted to the web server 10. It works for all kinds of modifications or tools that can be inserted into the web server 10 provided that the so-called E-contract is agreed upon and that the modifications requested by the computer 20 are allowed by the web server 10.

## Claims

1. Method for providing access to a web server (10), the access permitting a computer (20) connected to the web server (10) over a computerized network to effect changes on the web server (10), the method comprising the steps of:
the web server (10) receiving from the computer (20) data relating to the identity of the computer (20),
the web server (10) sending to the computer (20) data relating to the changes that are permitted to be effected on the web server (10),
the web server (10) receiving from the computer (20) data relating to the changes that the computer (20) possibly is to perform on the web server (10).

2. Method according to claim 1, **characterized by**
the data relating to the changes that are permitted to be effected on the web server (10) being sent in form of an XML file or a text file.

3. Method according to claim 1, **characterized by**
the data relating to the changes that the computer (20) possibly is to perform on the web server (10) being sent from the computer (20) in form of an XML file or a text file.

4. Method according to claim 1, further comprising the steps of
the web server (10) receiving from the computer (20) data relating to the changes that the computer (20) actually performs on the web server (10)
and
performing these changes on the web server (10).

5. Method according to claim 4, further comprising the step of
the web server (10) sending to the computer (20) data relating to the changes that have been performed on the web server (10).

6. Method according to claim 4, **characterized by**
the data relating to the changes that the computer (20) actually performs on the web server (10) being sent from the computer (20) in form of an XML file or a text file.

7. Web server (10) accessible by a computer (20) connected to the web server (10) over a computerized network to effect changes on the web server (10), the web server (10) comprising
means for receiving from the computer (20) data relating to the identity of the computer (20),
means for sending to the computer (20) data relating to the changes that are permitted to be effected on the web server (10) and
means for receiving from the computer (20) data relating to the changes that the computer (20) possibly is to perform on the web server (10).

8. Computer (20) connectable to a web server (10) over a computerized network comprising
means for sending to the web server (10) data relating to the identity of the computer (20),
means for receiving from the web server (10) data relating to the changes that are permitted to be effected on the web server (10) and
means for sending to the web server (10) data relating to the changes that the computer (20) possibly is to perform on the web server (10).

9. A software program providing access to a web server (10), the software program comprising instructions for performing the steps of:
receiving data relating to the identity of a computer (20) connectable to the web server (10) over a computerized network,
sending data relating to the changes that are permitted to be effected on the web server (10),
receiving data relating to the changes that are possibly to be performed on the web server (10).

## Patentansprüche

1. Verfahren zur Bereitstellung von Zugriff auf einen Webserver (10), wobei der Zugang es einem über ein computerbasiertes Netzwerk mit dem Webserver (10) verknüpften Computer (20) ermöglicht, Änderungen auf dem Webserver (10) auszuführen, wobei das Verfahren die folgenden Schritte umfasst:
Der Webserver (10) empfängt von dem Computer (20) Daten in Bezug auf die Identität des Computers (20),
der Webserver (10) sendet an den Computer (20) Daten in Bezug auf die Änderungen, deren Ausführung auf dem Webserver (10) zulässig ist,
der Webserver (10) empfängt von dem Computer (20) Daten in Bezug auf die Änderungen, die der Computer (20) möglicherweise auf dem Webserver (10) ausführen wird.

2. Verfahren nach Anspruch 1, **dadurch gekennzeichnet, dass** die Daten in Bezug auf die Änderungen, deren Ausführung auf dem Webserver (10) zulässig ist, in der Form einer XML-Datei oder einer Textdatei gesendet werden.

3. Verfahren nach Anspruch 1, **dadurch gekennzeichnet, dass** die Daten in Bezug auf die Änderungen, die der Computer (20) möglicherweise auf dem Webserver (10) ausführen wird, von dem Computer (20) in der Form einer XML-Datei oder einer Textdatei gesendet werden.

4. Verfahren nach Anspruch 1, weiterhin die folgenden Schritte umfassend:
Empfangen, an dem Webserver (10), von Daten, die sich auf die von dem Computer (20) momentan auf dem Webserver (10) ausgeführten Änderungen beziehen, von dem Computer (20), und
Ausführen dieser Änderungen auf dem Webserver (10).

5. Verfahren nach Anspruch 4, weiterhin den folgenden Schritt umfassend:
Senden, durch den Webserver (10), von Daten in Bezug auf die auf dem Webserver (10) ausgeführten Änderungen an den Computer (20).

6. Verfahren nach Anspruch 4, **dadurch gekennzeichnet, dass** die Daten in Bezug auf die Änderungen, die der Computer (20) momentan auf dem Webserver (10) ausführt, von dem Computer (20) in der Form einer XML-Datei oder einer Textdatei gesendet werden.

7. Webserver (10), welcher für einen über ein computerbasiertes Netzwerk mit dem Webserver (10) verknüpften Computer (20) zugänglich ist, um Änderungen auf dem Webserver (10) auszuführen, wobei der Webserver (10) umfasst:
Mittel zum Empfangen, von dem Computer (20), von Daten in Bezug auf die Identität des Computers (20),
Mittel zum Senden, an den Computer (20), von Daten in Bezug auf die Änderungen, deren Ausführung auf dem Webserver (10) zulässig ist, und
Mittel zum Empfangen, von dem Computer (20), von Daten in Bezug auf die Änderungen, die der Computer (20) möglicherweise auf dem Webserver (10) ausführen wird.

8. Computer (20), der über ein computerbasiertes Netzwerk mit einem Webserver (10) verknüpfbar ist, umfassend:
Mittel zum Senden von Daten in Bezug auf die Identität des Computers (20) an den Webserver (10),
Mittel zum Empfangen von Daten in Bezug auf die Änderungen, deren Ausführung auf dem Webserver (10) zulässig ist, von dem Webserver (10), und
Mittel zum Senden von Daten in Bezug auf die Änderungen, welche der Computer (20) möglicherweise auf dem Webserver (10) ausführen wird, an den Webserver (10).

9. Software-Programm zur Bereitstellung von Zugriff auf einen Webserver (10), wobei das Software-Programm Befehle für das Ausführen der folgenden Schritte enthält:
Empfangen von Daten in Bezug auf die Identität eines über ein computerbasiertes Netzwerk mit dem Webserver (10) verknüpfbaren Computers (20),
Senden von Daten in Bezug auf die Änderungen, deren Ausführung auf dem Webserver (10) zulässig ist,
Empfangen von Daten in Bezug auf die Änderungen, welche möglicherweise auf dem Webserver ausgeführt werden.

## Revendications

1. Procédé pour réaliser l'accès à un serveur Web (10), l'accès permettant à un ordinateur (20) connecté au serveur Web (10) par le biais d'un réseau informatique d'effectuer des modifications sur le serveur Web (10), le procédé comprenant les étapes suivantes :
le serveur Web (10) recevant de la part de l'ordinateur (20) des données en rapport avec l'identité de l'ordinateur (20),
le serveur Web (10) envoyant à l'ordinateur (20) des données en rapport avec les modifications autorisées à être effectuées sur le serveur Web (10),
le serveur Web (10) recevant de la part de l'ordinateur (20) des données en rapport avec les modifications que l'ordinateur (20) est susceptible de réaliser sur le serveur Web (10).

2. Procédé selon la revendication 1, **caractérisé en ce que**
les données en rapport avec les modifications autorisées à être effectuées sur le serveur Web (10) sont envoyées sous la forme d'un fichier XML ou d'un fichier texte.

3. Procédé selon la revendication 1, **caractérisé en ce que**
les données en rapport avec les modifications que l'ordinateur (20) est susceptible de réaliser sur le serveur Web (10) sont envoyées de l'ordinateur (20) sous la forme d'un fichier XML ou d'un fichier texte.

4. Procédé selon la revendication 1, comprenant en outre les étapes suivantes : le serveur Web (10) recevant de la part de l'ordinateur (20) des données en rapport avec les modifications que l'ordinateur (20) réalise réellement sur le serveur Web (10) et
la réalisation de ces modifications sur le serveur Web (10).

5. Procédé selon la revendication 4, comprenant en outre l'étape selon laquelle le serveur Web (10) envoie à l'ordinateur (20) des données en rapport avec les modifications qui ont été réalisées sur le serveur Web (10).

6. Procédé selon la revendication 4, **caractérisé en ce que** les données en rapport avec les modifications que l'ordinateur (20) réalise réellement sur le serveur Web (10) sont envoyées de l'ordinateur (20) sous la forme d'un fichier XML ou d'un fichier texte.

7. Serveur Web (10) accessible par un ordinateur (20) connecté au serveur Web (10) par le biais d'un réseau informatique pour effectuer des modifications sur le serveur Web (10), le serveur Web (10) comprenant :
des moyens pour recevoir de la part de l'ordinateur (20) des données en rapport avec l'identité de l'ordinateur (20),
des moyens pour envoyer à l'ordinateur (20) des données en rapport avec les modifications autorisées à être effectuées sur le serveur Web (10) et
des moyens pour recevoir de la part de l'ordinateur (20) des données en rapport avec les modifications que l'ordinateur (20) est susceptible de réaliser sur le serveur Web (10).

8. Ordinateur (20) qui peut être connecté à un serveur Web (10) par le biais d'un réseau informatique comprenant
des moyens pour envoyer au serveur Web (10) des données en rapport avec l'identité de l'ordinateur (20),
des moyens pour recevoir de la part du serveur Web (10) des données en rapport avec les modifications autorisées à être effectuées sur le serveur Web (10) et
des moyens pour envoyer au serveur Web (10) des données en rapport avec les modifications que l'ordinateur (20) est susceptible de réaliser sur le serveur Web (10).

9. Programme informatique réalisant l'accès à un serveur Web (10), le programme informatique comprenant des instructions pour exécuter les étapes suivantes :
réception de données en rapport avec l'identité d'un ordinateur (20) qui peut être connecté au serveur Web (10) par le biais d'un réseau informatique,
envoi de données en rapport avec les modifications autorisées à être effectuées sur le serveur Web (10),
réception de données en rapport avec les modifications susceptibles d'être effectuées sur le serveur Web (10).
